# EUROPEAN PATENT APPLICATION

(11) **EP 3 171 481 A1**
(43) Date of publication of application: **24.05.2017**
(21) Application number: 16171925.7
(22) Date of filing: 30.05.2016
(51) Int. Cl.: H02J 7/00

(54) **POWER SAVING DEVICE WITH POWER SUPPLY**

(30) Priority: 18.11.2015 CN 201510797084
(71) Applicant: Lite-on Electronics(Guangzhou) Limited, Industry Development zone Guangzhou (CN); Lite-On Technology Corporation, Taipei City 11492 (TW)
(72) Inventor: CHEN, Wen-Sheng, Taipei City (TW); LEE, Kun-Hung, New Taipei City 235 (TW); CHEN, Chih-Tai, New Taipei City (TW); CHIANG, Han-Ju, New Taipei City 220 (TW); LIN, Bo-Chih, Taipei City 116 (TW); HSU, Tsung-Po, New Taipei City 235 (TW); LIN, Wei-Ting, New Taipei City 236 (TW)
(74) Representative: Viering, Jentschura & Partner mbB Patent- und Rechtsanwälte

(57) **Abstract**

The present disclosure provides a power saving device with power supply, comprising a charger power circuit (10), a receptacle (20), a plug detection unit (30), an ON/OFF control circuit (40) and a power output enable circuit (50). The plug detection unit (30) uses a mechanical or electrical detection apparatus to detect whether a plug-in device is inserted or not. When there is no plug-in device in the receptacle (20), the power output enable circuit (50) will cut off the power to the charger power circuit (10). So the power consumption of the power saving device is reduced while no plug-in device is inserted into the receptacle (20).

## Description

### BACKGROUND

### 1. Technical Field

The present disclosure relates to a power saving device with power supply; particularly, to a USB wall embedded/mounted power saving charger.

### 2. Description of Related Art

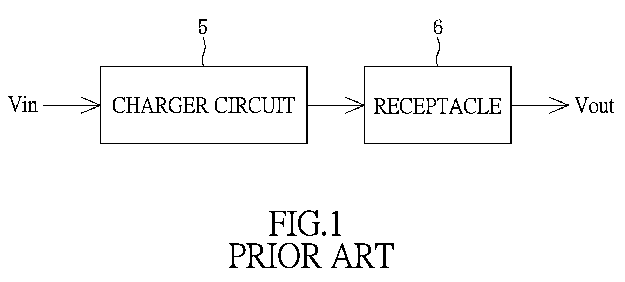

Figure 1 shows a conventional charger schematic, especially about a USB wall type power charger. The wall mounted/embedded USB charger is getting popular in many public places such as airports, railroad stations or MRT stations. Generally, the USB charging device typically provides 5V/ 1A or 5V/ 2A charging capability. Referring to figure 1, the conventional wall type charger includes a charger circuit 5 and a receptacle 6. The input of the charger circuit Vin, e.g. an utility AC power source, provides the power for the charger circuit 5. The output of the charger circuit 5 is coupled with the receptacle 6 which is used to charge smart handheld devices such as smart phone or smart tablet PC. The charger circuit in figure 1 is always on, so it consumes electric power when no device is plugged into the receptacle 6. That is to say, the conventional charger consumes some power even in a no-load state. Generally, if there are a lot of such conventional chargers in the no-load state, the total power consumption of these conventional chargers will be huge.

### SUMMARY

The present disclosure provides a power saving device which has power supply inside, and it will reduce the power consumption while the device is in a no-load state. Especially, this disclosure is related to an embedded power supply which could be applied to the USB type C or the USB Power Delivery charger. Furthermore, the power saving device could be embedded in a wall or a celling.

According to one exemplary embodiment of the present disclosure, a power saving device with power supply includes: a charger power circuit, having an input voltage for charging, the charger power circuit includes a driving circuit to drive a load (e.g. smart phone) for charging it; a receptacle, coupled with the charger power circuit; a plug detection unit, coupled with the receptacle, having the capability to send out a control signal, and when a plug inserted into the receptacle, the control signal will be in Control_On state, otherwise it stays in Control_Off state; an ON/OFF control circuit, coupled with the plug detection unit, according to the control signal of the plug detection unit to output an ON signal while the control signal is in Control_On state, the ON/OFF control circuit outputs an OFF signal while the control signal is in Control_Off state; and a power output enable circuit, having an input coupled with the ON/OFF control circuit and an output coupled with the driving circuit; when receiving the OFF signal, the power output enable circuit turns off the driving circuit to cut off the charger power circuit.

In order to further understand the present disclosure, the following embodiment is provided along with illustrations to facilitate the appreciation of the present disclosure; however, the appended drawings are merely provided for reference and illustration, without any intention to be used for limiting present disclosure.

### BRIEF DESCRIPTION OF THE DRAWINGS

Fig. 1 schematically shows a conventional USB charger.
Fig. 2 shows the first embodiment of a power saving device with power supply in accordance with the instant disclosure.
Fig. 3A shows the plug, the receptacle and the plug detection unit in accordance with the instant disclosure.
Fig. 3B shows the plug put into the receptacle and the plug detection unit in accordance with the instant disclosure.
Fig. 4 shows the second embodiment of a power saving device with power supply in accordance with the instant disclosure.
Fig. 5 shows the third embodiment of a power saving device with power supply in accordance with the instant disclosure.
Fig. 6 shows the fourth embodiment of a power saving device with power supply in accordance with the instant disclosure.
Fig. 7 shows the fifth embodiment of a power saving device with power supply in accordance with the instant disclosure.
Fig. 8 shows the sixth embodiment of a power saving device with power supply in accordance with the instant disclosure.

### DETAILED DESCRIPTION OF THE PREFERRED EMBODIMENTS

The aforementioned illustrations and following detailed descriptions are exemplary for the purpose of further explaining the scope of the present disclosure. Other objectives and advantages related to the present disclosure will be illustrated in the subsequent descriptions and appended drawings.

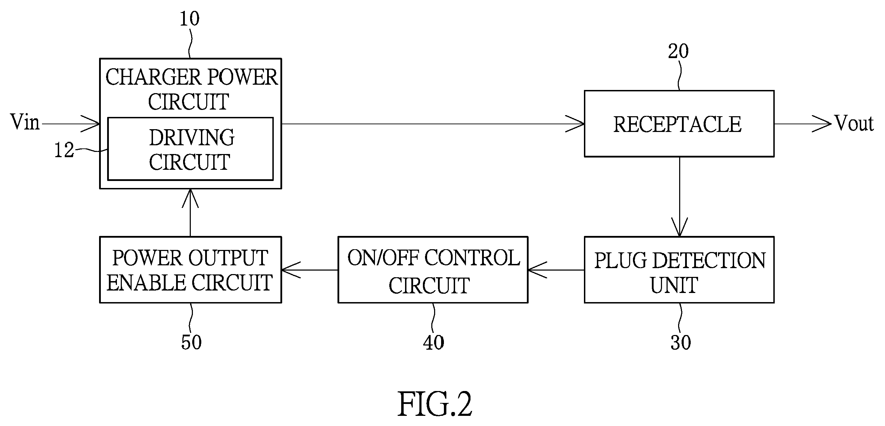

Fig.2 illustrates an exemplary first embodiment of the power saving device with power supply in accordance with the present disclosure. The power saving device includes a charger power circuit 10, a receptacle 20, a plug detection unit 30, an ON/OFF control circuit 40 and a power output enable circuit 50. The Vin is a power source, could be an utility AC power source, used to provide the electric power for the power saving device, and it is also the input of the charger power circuit 10. The charger power circuit 10 provides charging power to a plug-in load such as a smart phone or a smart tablet PC. The output of the charger power circuit 10 is coupled with the receptacle 20 which outputs a voltage (Vout) to the plug-in device. In the actual application, the receptacle 20 includes but not limited to the USB type C receptacle or the USB PD (Power Delivery) type receptacle.

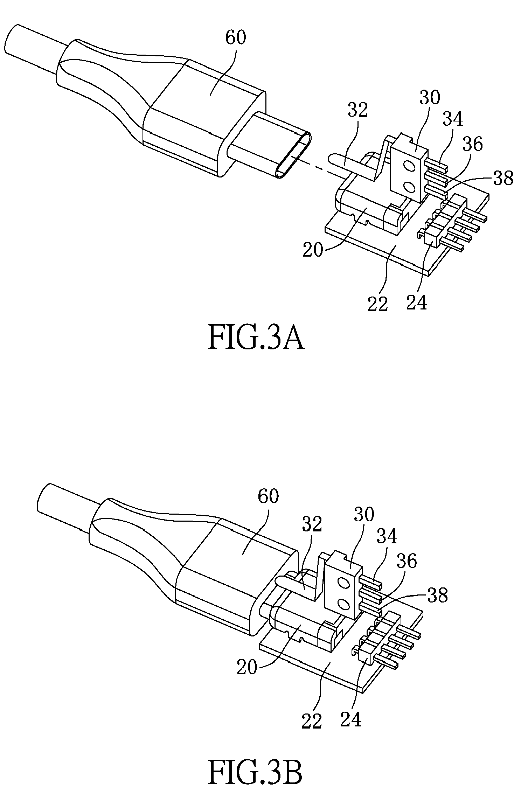

The receptacle 20 is coupled with the plug detection unit 30 which is used as a mechanical detection apparatus to detect whether the plug-in device is inserted or not. This mechanical detection apparatus of the plug detection unit 30 is only an exemplary, not used to limit the scope of the present disclosure. In the practical application, the plug detection unit 30 can be implemented by an electrical detection apparatus. The more detailed description of the plug detection unit 30 will be described in Figs. 3A and 3B. The output of the plug detection unit 30 is coupled with the ON/OFF control circuit 40 by using an interlinked action or transmitting a signal to trigger the ON/OFF control circuit 40 to output an ON signal or an OFF signal.

The output of the ON/OFF control circuit 40 is coupled with the power output enable circuit 50. The output of the ON/OFF control circuit 40 uses an interlinked action or transmitting a signal to couple with the power output enable circuit 50. When the power output enable circuit 50 gets an ON signal from the ON/OFF control circuit 40, it will enable the charger power circuit 10 to charge the plug-in device. On the other hand, the power output enable circuit 50 disables the charger power circuit 10 when the ON/OFF control circuit 40 outputs an OFF signal. By using such architecture, the power saving device could cut off the power when no device is plugged into the receptacle 20, so that the present disclosure reduces the power consumption efficiently while the charger is in the no-load state.

The operation of the power saving device in Fig. 2 is described as follow: When no device (please refer the Fig. 3A, the plug 60, could be a USB plug, is not plugged) is plugged into the receptacle 20, the plug detection unit 30 will output a signal in Control_Off state to make the ON/OFF control circuit 40 output an OFF signal to the power output enable circuit 50. Therefor the power output enable circuit 50 is in the OFF state so the charger power circuit 10 will not be enabled. There is no or less power consumption in the charger power circuit 10 when the plug detection unit 30 detects no plug-in device on the receptacle 20. On the contrary, the plug detection unit 30 will output a signal in Control_On state when it detects a plug-in device on the receptacle 20. The Control_On signal will trigger the ON/OFF control circuit 40 outputs an ON signal which will make the power output enable circuit 50 to enable the charger power circuit 10 then the plug-in device is being charged.

There is a driving circuit 12 in the charger power circuit 10 to drive the charger power circuit 10 to the charging state. The power output enable circuit 50 is coupled with the driving circuit 12 to enable the charger power circuit 10. When there is no device plugged in the receptacle 20, the plug detection unit 30 makes the ON/OFF control circuit 40 to output an OFF signal so the power output enable circuit 50 is not enabling the driving circuit 12 and thus the charger power circuit 10 is in OFF state. On the contrary, the driving circuit 12 is enabled to drive the charger power circuit 10 to be in an ON state when the device plugs in the receptacle 20.

Fig. 3A shows a plug 60, a receptacle 20, a substrate 22, a USB terminal 24 and the plug detection unit 30. The receptacle 20 and the USB terminal 24 are disposed on the substrate 22. The front end of the receptacle 20 is an interface for inserting the plug 60 into the receptacle 20 and is electrically coupled with the USB terminal 24 via the substrate 22. When the plug 60 is inserted into the receptacle 20, a plurality of USB signal are transmitted from the USB terminal 24 to the plug 60, and in vice versa, the USB signal can be transmitted from the plug 60 to the USB terminal 24.

The plug detection unit 30 is placed on top of the receptacle 20 to detect whether the plug 60 is inserted or not. In practical application, the plug detection unit 30 may be but not limited to a tact switch, a proximity switch, a light dependent resistor, a photoelectronic or a micro switch. In Fig. 3A, a micro switch, which is a mechanical detection apparatus, is shown as an exemplary plug detection unit 30. The plug detection unit 30 includes a touch piece 32, a normal close pin 34, a middle pin 36 and a normal open pin 38.

The touch piece 32 is placed near the interface of the receptacle 20 to detect whether the plug 60 is inserted or not. The normal close pin 34, the middle pin 36 and the normal open pin 38 are placed on the other side of the plug detection unit 30. If the plug 60 is not inserted into the receptacle 20, the middle pin 36 is coupled with the normal close pin 34; when the plug 60 is inserted into the receptacle 20 the touch piece 32 is touched, the middle pin 36 is coupled with the normal open pin 38. Fig. 3B shows the plug 60 is inserted into the receptacle 20 so that the touch piece 32 is touched.

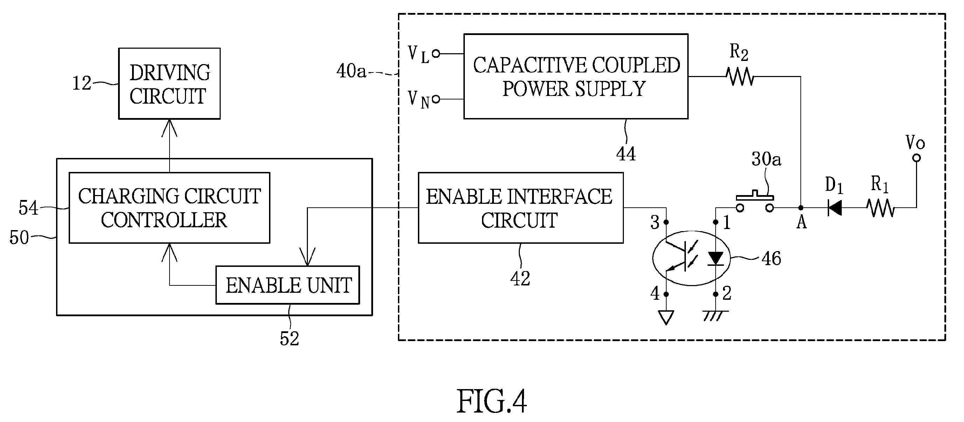

As shown in Fig. 4, the second embodiment includes an ON/OFF control circuit 40a, a power output enable circuit 50, and a driving circuit 12. The plug detection unit 30 is implemented as a tact switch 30a which is shown as a two-nodes push switch in Fig. 4. The ON/OFF control circuit 40a includes an enable interface circuit 42, a capacitive coupled power supply 44, an optical coupling switch 46, a first resistor R1, a second resistor R2 and a first diode D1. For convenience, the tact switch 30a is included in the ON/OFF control circuit 40a in Fig 4.

The capacitive coupled power supply 44 is coupled with a line voltage VL and a neutral voltage VN. The line voltage VL is the live line of the utility AC power source. The neutral voltage VN is the neutral line of the utility AC power source. The capacitive coupled power supply 44 is coupled to the node A through the second resistor R₂. Depending on the state of the node A, the capacitive coupled power supply 44 may convert the utility AC power source to the charging power for driving circuit 12. Node A is also coupled with a first node of the tact switch 30a and the cathode of the first diode D1. A second node of the tact switch 30a is coupled with the enable interface circuit 42 by the optical coupling switch 46. The anode of the first diode D1 is coupled with the first resistor R1; the other end of the first resistor R1 is coupled with a voltage-coupled node Vo. The voltage-coupled node Vo may be coupled with a DC voltage.

In Fig. 4, the power output enable circuit 50 includes an enable unit 52 and a charging circuit controller 54. The enable unit 52 receives an input from the enable interface circuit 42 and outputs a control signal to the charging circuit controller 54. Depending on this control signal, the charging circuit controller 54 generates an output to the driving circuit 12 to further control the charging operation of the charger power circuit 10.

The optical coupling switch 46 shown in Fig. 4 has nodes 1~4. When plug 60 is inserted into the receptacle 20, the tact switch 30a is closed; the current will go from node 1 to node 2 which turns on the diode of the optical coupling switch 46. Due to the optical coupling of the optical coupling switch 46, node 3 and node 4 are conducted and will activate the enable interface circuit 42. Once the enable interface circuit 42 is activated, the enable unit 52 is also activated that further activates the charging circuit controller 54. Then the driving circuit 12 is activated, so the whole system will be in charging state.

On the contrary, when the plug 60 is not inserted into the receptacle 20, the tact switch 30a is opened and thus node 3 and node 4 of the optical coupling switch 46 are also opened. So the enable interface circuit 42, the enable unit 52 and the charging circuit controller 54 are not enabled. The circuit loop of driving circuit 12 is disconnected due to the charging circuit controller 54 is not enabled and the power supplies to the charger power circuit 10 is cut off. Thus the power consumption is reduced significantly when there is no plug 60 in the receptacle 20.

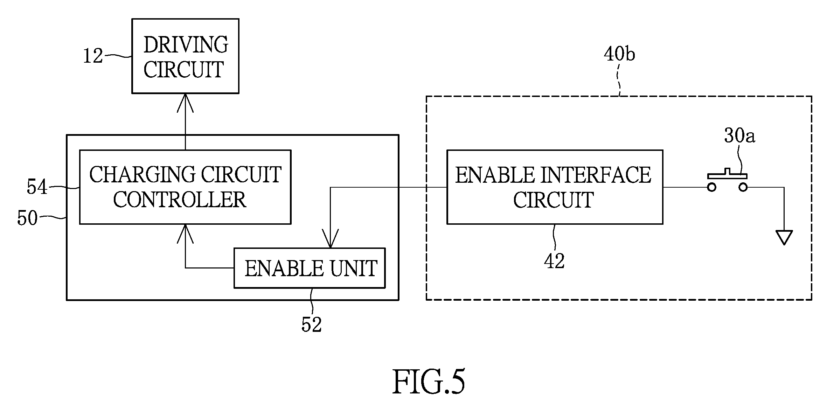

The third embodiment is shown in Fig. 5. The biggest difference between Fig. 5 and Fig. 4 is the optical coupling switch and the capacitive coupled power supply 44 are taken out of the ON/OFF control circuit 40b. The ON/OFF control circuit 40b only includes the enable interface circuit 42 and the tact switch 30a.

When no plug 60 is inserted into the receptacle 20, the tact switch 30a is in open state. The circuit loop of the enable interface circuit 42 will turn off the enable unit 52 due to the switch 30a is open. The charging circuit controller 54 will not turn on the driving circuit 12 since the enable unit 52 is in off state. As the result, the charger power circuit 10 is cut off. So the power consumption is reduced significantly when there is no plug 60 in the receptacle 20. In another way round, the tact switch 30a is touched when the plug 60 inserted into the receptacle 20, the enable interface circuit 42 is enabled which further enables the enable unit 52 and the charging circuit controller 54. The charging circuit controller 54 is enabled to control the driving circuit 12 to drive the charger power circuit 10, so the whole system is in charging state.

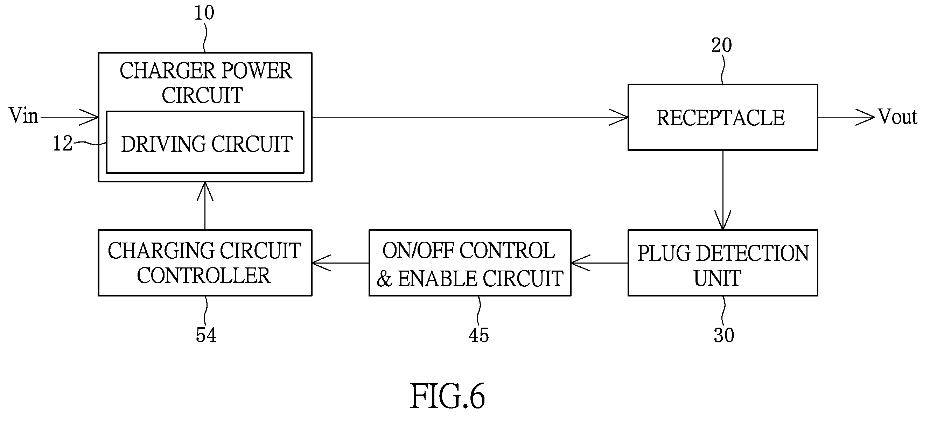

In Fig. 6, the fourth embodiment is shown. The ON/OFF control circuit 40 of the first embodiment shown in Fig. 2 is replaced with an ON/OFF control & enable circuit 45 and the power output enable circuit 50 is replaced with a charging circuit controller 54. The enabling functions of the ON/OFF control circuit 40 and the power output enable circuit 50 are replaced by the ON/OFF control & enable circuit 45 so the power output enable circuit 50 can be reduced into a simple charging circuit controller 54. In the practical application, the charging circuit controller 54 includes but not limit to a PWM IC, PWM controller or PWM control IC.

In Fig. 6, the output of the plug detection unit 30 is coupled with the ON/OFF control & enable circuit 45. The ON/OFF control & enable circuit 45 is coupled with a charging circuit controller 54. The charging circuit controller 54 is coupled with the driving circuit 12. When the plug 60 is inserted into the receptacle 20, the output of the plug detection unit 30 will finally drive the charger power circuit 10 in the charging state through the circuit block 45, 54, and 12 described above.

When no plug 60 is inserted into the receptacle 20, the plug detection unit 30 is not touched, the ON/OFF control & enable circuit 45 outputs an OFF signal so the charging circuit controller 54 is not enable. Then circuit loop of the driving circuit 12 is turned off and the power to the charger power circuit 10 is cut off. Consequently, the power consumption is reduced considerably a lot when there is no plug 60 in the receptacle 20.

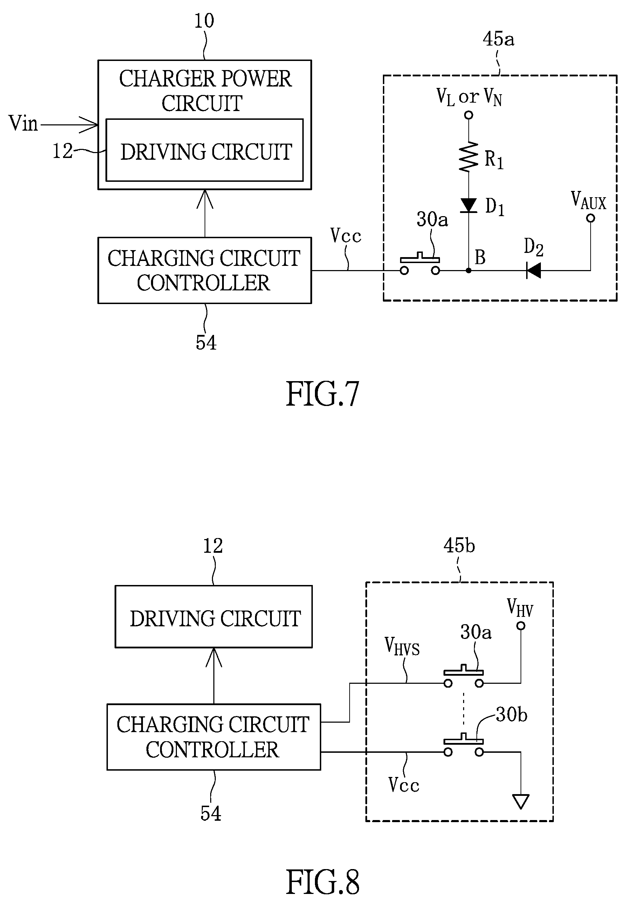

As shown in Fig. 7, the fifth embodiment shows the ON/OFF control & enable circuit 45a in more detail. The plug detection unit 30 is using a two nodes tact switch 30a. The tact switch 30a is placed in the ON/OFF control & enable circuit 45a for illustration purpose. The ON/OFF control & enable circuit 45a includes a first resistor R1, a first diode D1, a second diode D2 and an auxiliary winding voltage VAUX.

One end of the first resistor R1 is coupled with the line voltage VL or the neutral voltage VN, the other end of the first resistor R1 is coupled with the anode of the first diode D1. The cathode of the first diode D 1 is node B which is coupled with one end of the tact switch 30a and the cathode of the second diode D2. The anode of the second diode D2 is coupled with the VAUX which could be an inducing voltage induced from a winding coil of a transformer. The transformer could be a circuit element comprised in the charger power circuit 10. The other end of the tact switch 30a is coupled with the input of the charging circuit controller 54 as a source voltage V_{cc}. When the tact switch 30a is touched (i.e. the plug 60 is inserted into the receptacle 20), the charging circuit controller 54 enables the driving circuit 12 of the charger power circuit 10 for charging.

When the plug 60 is not in the receptacle 20, the tact switch 30a is opened (untouched) in Fig. 7, the two nodes of the tact switch 30a are disconnected. Thus the ON/OFF control & enable circuit 45a is not enabled and the node B is not connected to the charging circuit controller 54. It also means the ON/OFF control & enable circuit 45a generates an OFF signal or is in OFF state. The circuit loop of driving circuit 12 is in off state due to the charging circuit controller 54 is not enabled and the power to the charger power circuit 10 is cut off. The power consumption is reduced a lot when there is no plug 60 in the receptacle 20.

The sixth embodiment is shown in Fig. 8. The ON/OFF control & enable circuit 45 shown in Fig. 7 is replaced by an ON/OFF control & enable circuit 45b in Fig. 8. The ON/OFF control & enable circuit 45b includes a tact switch 30a and a linked switch 30b. The tact switch 30a has two nodes, one node is coupled with a high voltage VHV and the other node is coupled with the charging circuit controller 54 as a high starting voltage VHVS. The VHVS is the output of the ON/OFF control & enable circuit 45b. The linked switch 30b has two nodes, one node is coupled with the ground and the other node is coupled with the charging circuit controller 54 as a source voltage Vcc. The source voltage Vcc is another output of the ON/OFF control & enable circuit 45b which may be a source voltage for a PWM IC or a PWM controller.

The linked switch 30b and the tact switch 30a are interlinked. When the tact switch 30a is closed (touched), i.e. the two nodes of the tact switch 30a are connected, the two nodes of the linked switch 30b are also connected. When there is no plug 60 in the receptacle 20, the plug detection unit 30 is not touched; both of the tact switch 30a and the linked switch 30b are open. The ON/OFF control & enable circuit 45b is not outputting anything to the charging circuit controller 54. Thus, the charging circuit controller 54 is not enabled and the circuit loop of the driving circuit 12 is in off state. So the charger power circuit 10 is not in the charging state. On the contrary, when the plug 60 is inserted into the receptacle 20, the tact switch 30a and the linked switch 30b are closed. The ON/OFF control & enable circuit 45b is enabled and makes the charging circuit controller 54 connecting to the high voltage VHV and the ground. The charging circuit controller 54 enables the driving circuit 12 to drive the charger power circuit 10, so the whole system is in the charging state.

Even though numerous characteristics and advantages of the present disclosure have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A power saving device with power supply, comprising:
a charger power circuit (10), having an input coupled with an input voltage (Vin) for charging;
a receptacle (20), coupled with the charger power circuit (10);
a plug detection unit (30), coupled with the receptacle (20), having a touch piece (32);
an ON/OFF control & enable circuit (45), coupled with the plug detection unit (30) with interlinking, outputted an ON signal while the touch piece (32) is touched, an OFF signal while the touch piece (32) is untouched; and
a charging circuit controller (54), having an input coupled with the ON/OFF control & enable circuit (45) and an output coupled with the charger power circuit (10); when receiving the ON signal, the charging circuit controller (54) enable the charger power circuit (10) for charging; when receiving the OFF signal, the charging circuit controller (54) does not enable the charger power circuit (10).

2. The power saving device with power supply according to claim 1, wherein the receptacle (20) is an USB type C receptacle or an USB PD receptacle.

3. The power saving device with power supply according to claim 1, wherein the ON/OFF control & enable circuit (45/45a) includes:
a first resistor (R₁), having one end coupled with a line voltage (V_{L}) or a neutral voltage (V_{N});
a first diode (D₁), having an anode coupled with the other end of the first resistor (R₁) and a cathode coupled with one node (B) of the plug detection unit (30/30a); and
a second diode (D₂), having a cathode coupled with the cathode of the first diode (D₁) and an anode coupled with an auxiliary winding voltage (V_{AUX});
wherein the other node of the plug detection unit (30/30a) is coupled with the charging circuit controller (54).

4. The power saving device with power supply according to claim 1, wherein the charger power circuit (10) includes a driving circuit (12) coupled with the charging circuit controller (54).

5. The power saving device with power supply according to claim 3, wherein the auxiliary winding voltage (V_{AUX}) is induced from a winding coil of a transformer.

6. The power saving device with power supply according to claim 4, wherein the driving circuit (12) drives the charger power circuit (10) according to whether the charging circuit controller (54) is enabled or not; when the touch piece (32) is untouched, the ON/OFF control & enable circuit (45) does not enable the charging circuit controller (54), a circuit loop of the driving circuit (12) will cut the charging power of the charger power circuit (10) in order to reduce the power consumption.

7. The power saving device with power supply according to claim 1, wherein the ON/OFF control & enable circuit (45/45b) includes a linked switch (30b) which interlinking with the plug detection unit (30/30a); the linked switch (30b) having two nodes, one node of the linked switch (30b) is coupled with a ground, the other node of the linked switch (30b) is coupled with the charging circuit controller (54) as a source voltage Vcc.

8. The power saving device with power supply according to claim 7, wherein one node of the plug detection unit (30/30a) is coupled with a high voltage (V_{HV}), the other node of the plug detection unit (30/30a) is coupled with the charging circuit controller (54) as a high starting voltage (V_{HVS}).

9. A power saving device with power supply, comprising:
a charger power circuit (10), having an input coupled with an input voltage for charging; the charger power circuit includes a driving circuit (12) to drive the charger power circuit (10) for charging;
a receptacle (20), coupled with the charger power circuit (10);
a plug detection unit (30), coupled with the receptacle (20), having a touch piece (32);
an ON/OFF control circuit (40), coupled with the plug detection unit (30) with interlinking, outputs an ON signal while the touch piece (32) is touched or outputs an OFF signal while the touch piece (32) is untouched; and
a power output enable circuit (50), having an input coupled with the ON/OFF control circuit and an output coupled with the driving circuit (12); when receiving the OFF signal, the power output enable circuit (50) does not enable the driving circuit (12) so as to cut the power of the charger power circuit (10).

10. The power saving device with power supply according to claim 9, wherein the receptacle (20) is an USB type C receptacle or an USB PD receptacle.

11. The power saving device with power supply according to claim 9, wherein the plug detection unit (30) is one of a tact switch, a proximity switch, a light dependent resistor, a photo electronic or a micro switch.

12. The power saving device with power supply according to claim 9, wherein the ON/OFF control circuit (40/40a) includes:
a capacitive coupled power supply (44) having two input, one input coupled with a line voltage (V_{L}), the other input coupled with a neutral voltage (V_{N}), the capacitive coupled power supply (44) having an output coupled with the first node (A) of the plug detection unit (30/30a);
an optical coupling switch (46) having two input nodes, one is coupled with the second node of the plug detection unit (30/30a), the other input node is coupled with a ground; the optical coupling switch (46) having two output nodes, one output node is coupled with a ground; and
an enable interface circuit (42) having an input coupled with the other output node of the optical coupling switch (46) and an output coupled with the power output enable circuit (50).

13. The power saving device with power supply according to claim 12, wherein the power output enable circuit (50) includes:
an enable unit (52) having an input and an output; the input of the enable unit (52) coupled with the output of the enable interface circuit (42); and
a charging circuit controller (54) having an input coupled with the output of the enable unit (52), an output coupled with the driving circuit (12);
wherein, when a plug (60) is inserted into the receptacle (20), the optical coupling switch (46) will trigger the enable interface circuit (42) to enable the enable unit (52), the enable unit (52) enables the charging circuit controller (54) to make the driving circuit (12) to drive the charger power circuit (10) for charging; when there is no plug (60) inserted in the receptacle (20), the charging power of the charger power circuit (10) is cut off.

14. The power saving device with power supply according to claim 9, wherein the ON/OFF control circuit (40/40b) includes:
an enable interface circuit (42) having an input coupled with the second node of the plug detection unit (30/30a), an output coupled with the power output enable circuit (50); and
wherein the first node of the plug detection unit (30/30a) is coupled with a ground; the output of the enable interface circuit (42) will be the output of the ON/OFF control circuit (40/40b).

15. The power saving device with power supply according to claim 14, wherein, the power output enable circuit (50) includes:
an enable unit (52) having an input and an output; the input of the enable unit (52) coupled with the output of the enable interface circuit (42); and
a charging circuit controller (54) having an input coupled with the output of the enable unit (52) and an output coupled with the driving circuit (12):
wherein, when a plug (60) is inserted in the receptacle (20), the two nodes of the plug detection unit (30/30a) are connected, the enable interface circuit (42) will trigger the enable unit (52) to further let the enable unit (52) enable the charging circuit controller (54) to make the driving circuit (12) to drive the charger power circuit (10) for charging; when there is no plug (60) inserted in the receptacle (20), the charging power of the charger power circuit (10) is cut off.
